# EUROPEAN PATENT SPECIFICATION

(11) **EP 4 162 114 B1**
(45) Date of publication and mention of the grant of the patent: **20.11.2024**
(21) Application number: 21728174.0
(22) Date of filing: 19.05.2021
(51) Int. Cl.: E02F 9/12, E02F 9/26

(54) **DETECTING RELATIVE POSITION OF SUPERSTRUCTURE AND UNDERCARRIAGE ON A CONSTRUCTION MACHINE**
ERFASSUNG DER RELATIVEN POSITION VON AUFBAU UND FAHRWERK AN EINER BAUMASCHINE
DÉTECTION DE LA POSITION RELATIVE DE LA SUPERSTRUCTURE ET DU TRAIN DE ROULEMENT SUR UNE MACHINE DE CONSTRUCTION

(30) Priority: 05.06.2020 GB 202008538
(43) Date of publication of application: 12.04.2023
(73) Proprietor: Caterpillar Global Mining HMS GmbH, 44149 Dortmund (DE)
(72) Inventor: BITTER, Marcus, 44149 Dortmund (DE)
(74) Representative: Novagraaf Group
(86) International application number: PCT/EP2021/025186
(87) International publication number: WO 2021/244774

(56) References cited:
- CN-A- 106 522 302
- DE-A1- 102013 212 358
- DE-T5- 112015 000 068

## Description

### Technical Field

Embodiments of the present invention relate to a method of operating a construction machine comprising a superstructure and an undercarriage rotatably coupled to thereto. Some embodiments of the present invention relate to a corresponding construction machine.

### Technological Background

Construction machines such as excavators, backhoes, mining shovels, and the like are used for excavation work. These excavating machines typically comprise an upper carriage, also called superstructure, and an undercarriage, to which the superstructure is rotatably mounted. On the electronic side, construction machines usually comprise operator assist systems such as the Caterpillar HMS Operator Assist system, which are designed to prevent mechanical components of the construction machine's attachment from hitting mechanical endstops or at least mitigate an impact of the attachment by slowing it down accordingly.

Due to the harsh environments in which excavators, backhoes, mining shovels and the like are typically operating, there exists a tendency in the art to keep the undercarriage largely clear of electronic and/or sensitive components. Following this approach, the electronic infrastructure of the construction machine is almost entirely realized within the superstructure. In some cases, the superstructure retrieves vital control data such as orientation, acceleration or the like vastly independent from the undercarriage. As an example, current level sensor technologies such as the Caterpillar RISER or the R2 module retrieve an absolute angle of the superstructure which is entirely uncorrelated to the orientation of the undercarriage. Consequently, the relative position of the undercarriage towards the superstructure may be unknown to the Operator Assist system. Since the undercarriage is not mapped in the Operator Assist system, it falls within the remit of the operator to avoid hitting and damaging the track chains of the undercarriage with the work implement. In an effort to further increase operation safety, it is desired to shift the task of avoiding hitting and damaging the undercarriage from the operator to an Operator Assist system.

Placing an angle sensor in the center of the swivel between the superstructure and the undercarriage is not always feasible. As an example, construction machines that are AC powered usually have their power cables routed through the middle section of the machine's vertical center line, allowing no space for implementing angle sensors. To integrate such an angle sensor into the swivel, several more far-reaching design changes are required. In view thereof, such an angle sensor placement has been identified as a too costly upgrade with regard to the expected benefits.

From DE 10 2013 212 358 A1 a method for determining a yaw angle between a superstructure and an undercarriage about the vertical axis of a work machine, in particular an excavator, is known, which is based on an integrated rotation speed. Furthermore, CN 106 522 302 B discloses an excavator and an excavator rotation angle detection device.

### Summary of the Invention

In view of the prior art, it is an objective of the present invention to provide an improved method for operating a construction machine in a simple, robust and cost-effective way for a wide range of different design configurations of the construction machines is required. Further, a construction machine configured to carry out the method should be provided.

This is solved by means of a method of operating a construction machine comprising a superstructure and an undercarriage coupled thereto with the features of claim 1 as well as a construction machine according to claim 14. Preferred embodiments are set forth in the present specification, the Figures as well as the dependent claims.

Accordingly, a method of operating a construction machine comprising a superstructure in an undercarriage rotatably coupled thereto is provided. The method comprises the step of retrieving a trigger signal at a predetermined relative angle between the superstructure and the undercarriage while operating the construction machine and a step of retrieving an absolute angle of the superstructure, the retrieved absolute angle being uncorrelated to the orientation of the undercarriage. The method furthermore comprises a step of calculating a current relative angle between the superstructure and the undercarriage on the basis of the trigger signal and the absolute angle, wherein the absolute angle is known for the time the trigger signal is retrieved and for the time the current relative angle is calculated.

Further, a construction machine comprising an undercarriage in the superstructure rotatably mounted thereto is provided. The construction machine comprises an absolute angle detection means for detecting an absolute angle of the superstructure being uncorrelated to the orientation of the undercarriage, a sensor unit configured to retrieve a trigger signal when the superstructure is in a predetermined relative angle with the undercarriage and an operator assist system for calculating a current relative angle based on the absolute angle and the trigger signal, wherein the absolute angle is known for the time the trigger signal is retrieved and for the time the current relative angle is calculated.

### Brief Description of the Drawings

The present invention will be more readily appreciated by reference to the following detailed description when being considered in connection with the accompanying drawings in which:
Figure 1 schematically illustrates a typical range of motion of a work implement with respect to the undercarriage from a side view according to a construction machine known from the state of the art;
Figure 2 shows a flow diagram schematically illustrating a method for operating a construction machine according to one embodiment;
Figure 3 shows a flow diagram schematically illustrating a method for operating a construction machine according to another embodiment;
Figures 4A-4E explain the relevant angles and schematically illustrate an excerpt of a cross-section of a construction machine with an undercarriage and a superstructure in various relative positions of the superstructure relative to the undercarriage, seen from above;
Figures 5A-5D schematically illustrate a construction machine with an undercarriage and a superstructure in various relative positions of the superstructure relative to the undercarriage, seen from above;
Figure 6 shows a flow diagram schematically illustrating a method of operating a construction machine according to a further embodiment; and
Figure 7 shows a flow diagram schematically illustrating a method of operating a construction machine according to an even further embodiment;
Figure 8 schematically illustrates the construction machine of Figures 5A-5D in a view seen from above; and
Figure 9 shows a swivel portion of the construction machine seen from the inside of an undercarriage in a perspective view.

### Detailed Description of Preferred Embodiments

In the following, the invention will be explained in more detail with reference to the accompanying Figures. In this respect, some embodiments of the present invention are explained with reference numerals and repeated description thereof may be omitted in order to avoid redundancies.

The present invention is generally directed towards a method of operating a construction machine comprising a superstructure and an undercarriage rotatably coupled thereto. According to embodiments of the present invention, the method provides safe and simple operation methods suitable for a wide range of different construction machines such as excavators and mining shovels. In particular, the method is suitable for a wide range of different configurations of rotational interconnections between the undercarriage and the superstructure. The method according to the present invention prevents accidentally hitting and damaging components of the undercarriage with components of the superstructure while operating the construction machine.

The basic methods of operating a construction machine comprising a superstructure and an undercarriage rotatably coupled thereto are well known to a person skilled in the art and are thus not further specified. Rather, characteristics of the method of operating a construction machine comprising a superstructure and an undercarriage rotatably coupled thereto according to the present invention are addressed and specified in the following.

Thereto, the present invention and its underlying principles are explained exemplary for a construction machine comprising tracks on the undercarriage and an excavator boom and stick assembly on the superstructure. However, besides the excavator, any other construction machine may be used interchangeably in combination with the undercarriage and vice versa in the undercarriage may be used interchangeably with the superstructure as disclosed the following.

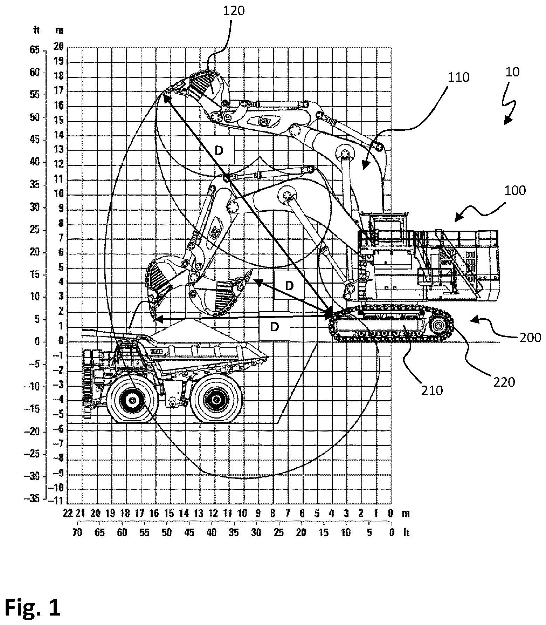

Figure 1 schematically illustrates a typical range of motion of a work implement with respect to the undercarriage from a side view according to a construction machine known from the state of the art. To this end, the shown construction machine 10 comprises a superstructure 100 which is rotatably coupled to an undercarriage 200. The superstructure 100 comprises a boom and stick assembly 110 having a work tool 120 attached to the proximal end of the boom and stick assembly 110. The undercarriage 200 comprises a basis 210 as well as chain tracks 220. As can be seen from Figure 1, the entire range of motion of the work tool 120, represented by the plotted curves in the diagram, intersects at least with the basis 210 and the chain tracks 220 of the undercarriage 200.

Consequently, an operator may theoretically hit and damage the undercarriage 200 with the work tool 120 if this operation is not otherwise prohibited by an operator assist system. According to the definition set forth in the present description, hitting and damaging the undercarriage 100 may occur if the current relative distance D between a component of the superstructure 100, such as the work tool 120, and the undercarriage 200 becomes zero.

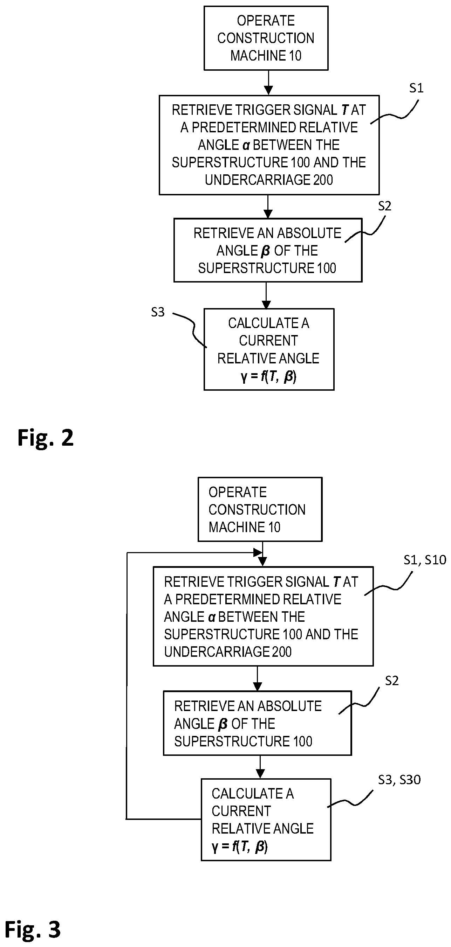

Figure 2 shows a flow diagram schematically illustrating a first embodiment of the method for operating a construction machine 10. During operation of the construction machine 10 the superstructure 100 may be rotated with respect to an undercarriage 200. Regardless of its relative position towards the undercarriage 200, the superstructure 100 retrieves in step S1 a trigger signal T at a predetermined relative angle α between the superstructure 100 and the undercarriage 200 while operating the machine 10.

As set forth in Figure 1, retrieving a trigger signal T requires a condition in which the superstructure 100 is in a predetermined relative angle α with respect to the undercarriage. As the trigger signal T is retrieved at a predetermined relative angle α, the trigger signal T corresponds to this known predetermined relative angle α. In other words, this predetermined relative angle α may be understood as a known, predetermined angle at which a trigger signal may be retrieved. There may be several different predetermined relative angles α at which a trigger signal may be provided. Trigger signals T may be constant or may differ time-wise and/or location-wise.

According to a further step S2, an absolute angle β is retrieved. Such an absolute angle β may be retrieved from an existing component such as a level sensor in a Caterpillar RISER or an R2 module. Herein, the absolute angle β is uncorrelated with the orientation of the undercarriage 200 to which the superstructure 100 is rotatably coupled to. As an example, the absolute angle β may have an arbitrary initial orientation. Alternatively, the absolute angle β may be correlated with an external orientation, for example a compass direction or any other cardinal direction. Retrieving the absolute angle β of the superstructure 100 in step S2 of the method may be conducted continuously or intermittently during operation or may alternatively be coupled to further conditions.

In a subsequent step S3, a current relative angle γ between the superstructure 100 and the undercarriage 200 is calculated. The current relative angle γ represents the actual current orientation of the superstructure 100 with respect to the undercarriage 200. Accordingly, the current relative angle γ is calculated on the basis of the trigger signal T and the absolute angle β. The calculation of the current relative angle γ in step S3 may thus be understood as a combination of the predetermined relative angle α with the uncorrelated absolute angle β.

In other words, the current relative angle γ is a function of a predetermined relative angle α serving as a calibration input, and an uncorrelated absolute angle β serving as an indicator of the angular change. In order to calculate the current relative angle γ, both the relative angle and the absolute angle must be combined. To do so, for any retrieved trigger signal T a corresponding absolute angle β needs to be retrieved. The current relative angle γ may then be calculated using the predetermined relative angle α provided by the trigger signal T and the absolute angle β. The absolute angle β must be known for both the time a trigger signal T was retrieved and the time for which the calculation of the current relative angle γ shall be conducted. In view thereof, the retrieving the absolute angle β in step S2 may preferably be conducted continuously and even before retrieving a trigger signal T in step S1.

Figure 3 shows a flow diagram schematically illustrating a second embodiment of the method for operating a construction machine 10. According to this embodiment, the method comprises a step S30 of recalculating the current relative angle between the superstructure 100 and the undercarriage 200 every time a trigger signal T is received. In this way, upon such a recalculation, the accuracy of the calculation may be improved. Optionally, the method may comprise a step of retrieving S 10 at least one further trigger signal T at at least one further predetermined relative angle α between the superstructure 100 and the undercarriage 200.

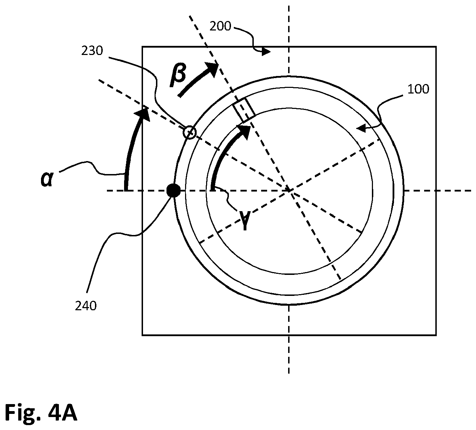

The underlying principle of this method may best be explained on behalf of Figures 4A-4E. Therein, an excerpt of a cross-section of a construction machine 10 comprising an undercarriage 200 and a superstructure 100 coupled thereto is shown in various relative positions. According to the Figures 4A-4E, three angles are important, namely the absolute angle β, corresponding to an orientation of the superstructure 100 independent from the undercarriage 200, the predetermined relative angle α, corresponding to a predetermined relative orientation of the superstructure 100 with respect to the undercarriage 200, and the current relative angle γ, corresponding to the current relative orientation of the superstructure 100 with respect to the undercarriage 200. Within the Figures 4A-4E, the superstructure 100 comprises a sensor unit 140. The undercarriage 200 according to the embodiment set forth in Figures 4A-4E comprises a trigger unit 230 provided at a predetermined relative angle α = 30°.

Figure 4A provides an explanation of the individual angles based on an arbitrary posture of the superstructure 100 relative to the undercarriage 200. The predetermined relative angle α is predetermined to be 45°. This predetermined relative angle α is for example structurally implemented into the undercarriage 200. The predetermined relative angle α is based on a reference point 240 provided on the undercarriage 200. In other words, said predetermined relative angle α is not altered by rotating the superstructure 100 relative to the undercarriage 200. Instead, the predetermined angle α is defined by the position of the undercarriage-components trigger unit 230 and the reference point 240 alone, regardless of a posture of the superstructure 100.

Accordingly, the absolute angle β is an angle provided by the superstructure 100 which is by its nature entirely uncorrelated with any other angle α and γ. The absolute angle β may be understood for example as an angle of the superstructure 100 having a reference point beyond or outside the undercarriage 200. In summary, there is a hardware-implemented predetermined angle α and an uncorrelated superstructure-only angle, the absolute angle β. To correlate those two angles α and β, the current relative angle γ is defined. How this correlation may be achieved will be explained on the basis of the subsequent Figures.

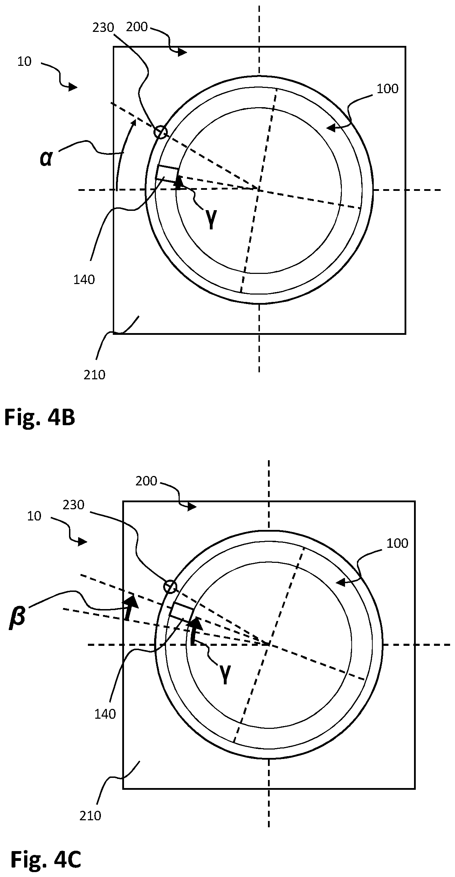

Figure 4B represents an initial condition for example at the time of starting up the construction machine 10 without prior rotation of the superstructure 100. Since at this time the superstructure 100 has not been rotated relative to the undercarriage 200, the absolute angle β is an arbitrary angle (not depicted). According to the representation of Figure 4B, the superstructure 100 is positioned at an angular displacement, clockwise at about γ = 10°, with respect to the undercarriage 200. However, at this stage, this current relative angle γ is still unknown to the Operator Assist system.

Figure 4C represents a position in which the superstructure 100 is rotated, starting from the original displacement, in a clockwise direction about the undercarriage 200. As soon as a rotation between the superstructure 100 and the undercarriage 200 occurs, the absolute angle β is retrieved according to step S2. At this stage, the current relative angle γ between the superstructure 100 and the undercarriage 200 is still unknown to the Operator Assist system.

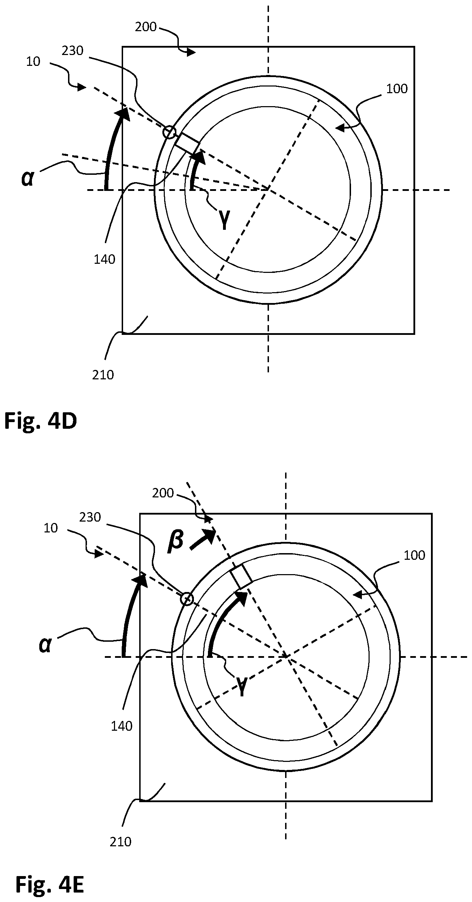

Figure 4D represents a position in which the superstructure 100 is rotated further in a clockwise direction until the sensor unit 140 reaches the trigger unit 230 at the predetermined relative angle α. In this case, a trigger signal T is retrieved according to step S 1 of the method. At the time the trigger signal T is retrieved, the current relative angle γ is set to be equal to the predetermined relative angle α, hence 30° according to the embodiment shown in Figure 4D. At the same time, the absolute angle β may be calibrated based on the predetermined relative angle α. As an example, the absolute angle β may be set to zero for the angle representing the predetermined relative angle α.

Figure 4E represents a position in which the superstructure 100 is rotated even further in a clockwise direction. At this stage, the absolute angle β is retrieved in step S2 and is calibrated using the trigger signal T, which corresponds to the predetermined relative angle α. In step S3, the current relative angle γ can thus be calculated on the basis of the trigger signal T retrieved in step S1 and the absolute angle β retrieved in step S2.

As a consequence, as soon as the first trigger signal T is detected, information concerning the current relative angle of the superstructure 100 with respect to the undercarriage 200 is made available.

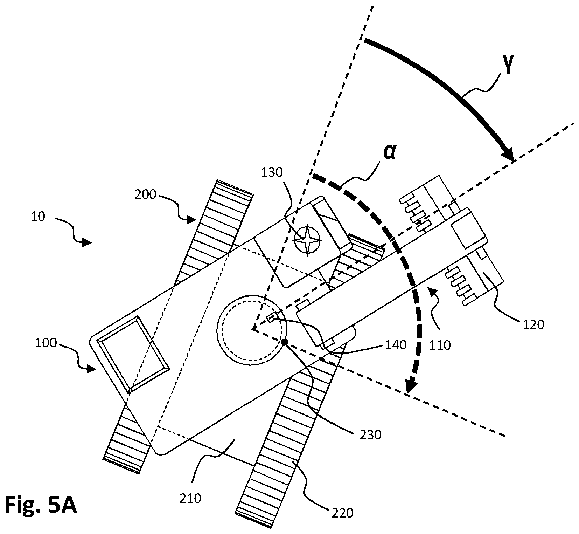

The underlying principle of the method may also be explained on behalf of a further embodiment of the construction machine 10 which is shown in Figures 5A-5D. Figures 5A-5D schematically illustrate a construction machine 10 shown from above on the basis of several different angles. According to this embodiment, the construction machine 10 comprises a superstructure 100 which is rotatably coupled to an undercarriage 200.

The superstructure 100 comprises a boom and stick assembly 110 to which a work tool in the shape of a bucket 120 is mounted to the proximal end of the tool and stick assembly 110. The superstructure 100 further comprises an absolute angle detection means 130 as well as one sensor unit 140. The undercarriage 200 of the construction machine 10 comprises a base 210 and chain tracks 220. Further, the undercarriage 200 comprises a trigger unit 230. The sensor unit 140 on the superstructure 100 and the trigger unit 230 on the undercarriage 200 are positioned such that a rotation of the superstructure 100 in a clockwise direction at about 90° relative to the undercarriage 200 triggers a trigger signal T. Hence, according to this embodiment, the predetermined relative angle is set to 90° in a clockwise direction.

Figure 5A represents an initial condition for example at the time of starting up the construction machine 10 without prior rotation of the superstructure 100. Since at this time the superstructure 100 has not been rotated relative to the undercarriage 200, the absolute angle β is an arbitrary angle (not depicted). According to the representation of Figure 5A, the superstructure 100 is positioned in an angular displacement, clockwise at about γ = 30°, with respect to the undercarriage 200. However, at this stage, this current relative angle γ is still unknown to the Operator Assist system.

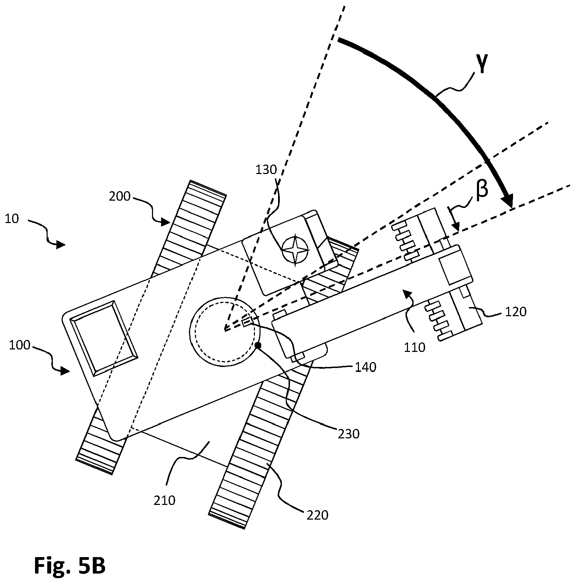

Figure 5B represents a position in which the superstructure 100 is rotated, starting from the original displacement, in a clockwise direction about the undercarriage 200. As soon as a rotation between the superstructure 100 and the undercarriage 200 occurs, the absolute angle β is retrieved according to step S2. At this stage, the current relative angle γ between the superstructure 100 and the undercarriage 200 is still unknown to the Operator Assist system.

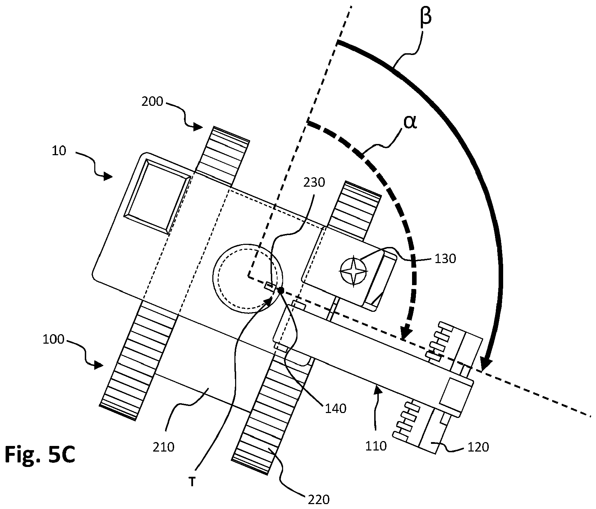

Figure 5C represents a position in which the superstructure 100 is rotated further in a clockwise direction until the sensor unit 140 reaches the trigger unit 230 at the predetermined relative angle α. In this case, a trigger signal T is retrieved according to step S 1 of the method. At the time the trigger signal T is retrieved, the current relative angle γ is set to be equal to the predetermined relative angle α, hence 90° according to the embodiment shown in Figure 4D. At the same time, the absolute angle β may be calibrated based on the predetermined relative angle α. As an example, the absolute angle β may be set to zero for the angle representing the predetermined relative angle α.

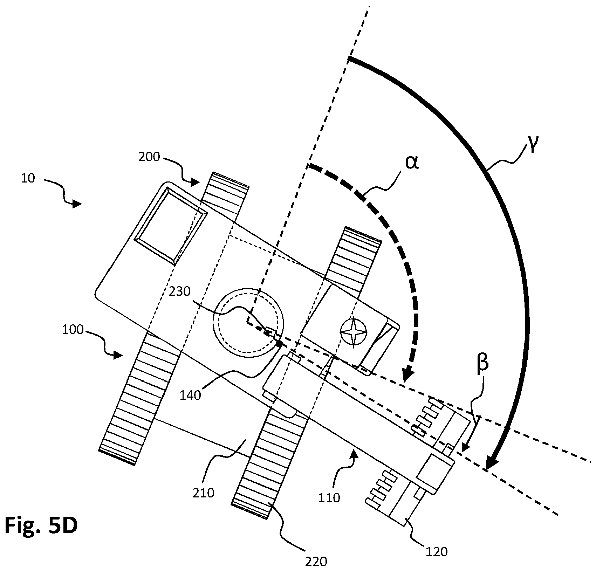

Figure 5D represents a position in which the superstructure 100 is rotated even further in a clockwise direction. At this stage, the absolute angle β is retrieved in step S2 and is calibrated using the trigger signal T, which corresponds to the predetermined relative angle α. In step S3, the current relative angle γ can thus be calculated on the basis of the trigger signal T retrieved in step S 1 and the absolute angle β retrieved in step S2.

Alternatively, the predetermined relative angle α may at least one of 45°, 90°, 180° and/or 270°. Further, the predetermined relative angle α may be adjustable by the operator. In any case, the predetermined relative angle α is to be selected such that during a normally expected work cycle of a given task, this predetermined angle α is reached during operation.

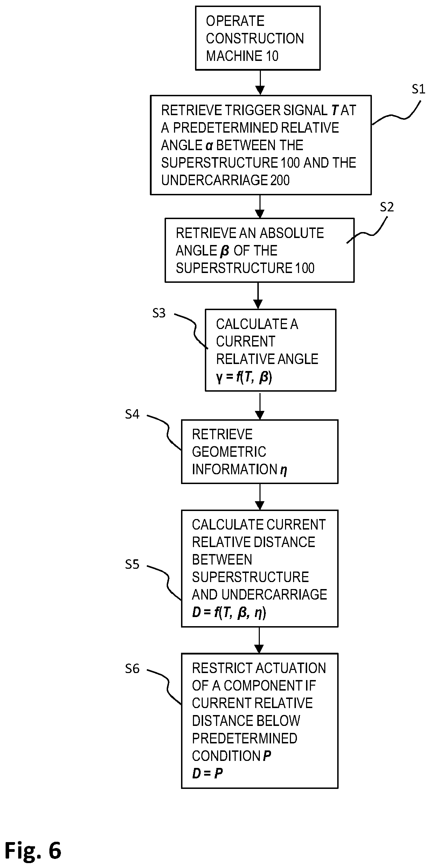

Figure 6 shows a flow diagram schematically illustrating a method of operating a construction machine according to a further embodiment. According to this embodiment, a further step S4 of retrieving geometric information η is provided. Subsequently, a further step S5 of calculating, based on the current relative angle γ between the superstructure 100 and the undercarriage 200, at least one current relative distance D between the undercarriage 200 and a component of the superstructure 100 is provided. Finally, a step S6 of restricting an actuation of a component of the superstructure and/or the undercarriage is provided, if the at least one current relative distance D fulfills a predetermined condition P. In this way, upon having calculated the current relative angle γ, the current relative distance D of any component potentially hitting and damaging the track chains may be calculated. Thereby, operator inputs may be checked and validated against potentially harmful outcomes, without the necessity of additional complex electronic components and by largely keeping the undercarriage clear of electronic components. In an ideal case, the undercarriage may only comprise additional mechanical switches for retrieving the predetermined relative angle α in step S1. This renders the upgraded undercarriage equally resilient against dirt and other harsh environment impacts as known undercarriages.

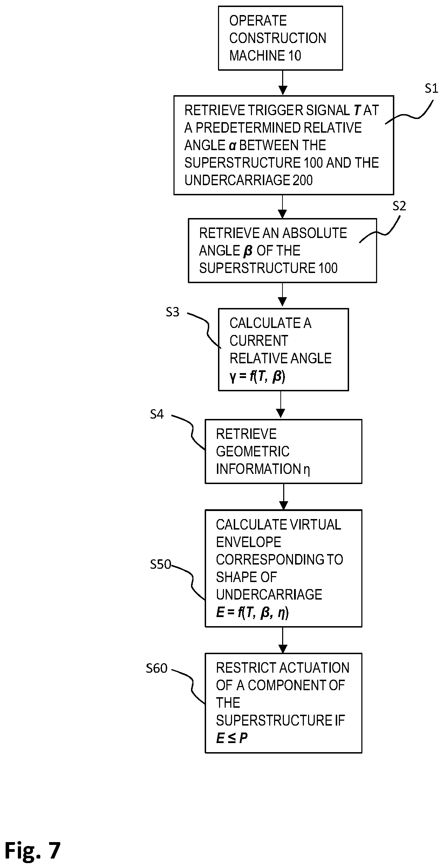

Figure 7 shows a flow diagram schematically illustrating a method of operating a construction machine according to a further embodiment. According to this embodiment, a further step S4 of retrieving geometric information η is provided. Subsequently, a further step S50 may be provided. According to this step, a virtual envelope E corresponding to the shape of the undercarriage 200 is calculated, preferably wherein the virtual envelope E follows the contour of the undercarriage 200 at a predetermined distance E1. Finally, a further step S60 is provided, restricting an actuation of a component of the superstructure and/or the undercarriage 200, if said component reaches or intersects the virtual envelope E. In this way, upon having calculated the current relative angle γ, the current relative distance D of any component potentially hitting and damaging the track chains may be calculated. Thereby, operator inputs may be checked and validated against potentially harmful outcomes, without the necessity of additional complex electronic components and by largely keeping the undercarriage clear of electronic components. In an ideal case, the undercarriage according to this disclosure may only comprise additional mechanical switches for retrieving the predetermined relative angle α in step S1. This renders the upgraded undercarriage equally resilient against dirt and other harsh environment impacts as known undercarriages.

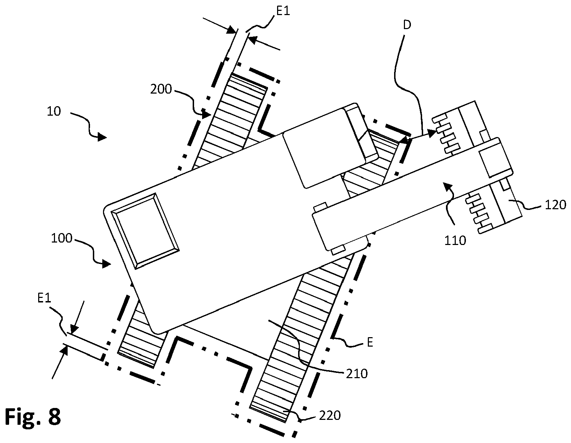

Figure 8 schematically illustrates the construction machine of Figures 5A-5D in a view seen from above. Specifically, it is shown a construction machine 10 comprising a superstructure 100 which is rotatably coupled to an undercarriage 200. Similar the construction machine 10 shown in Figures 5A - 5D, the superstructure 100 comprises a boom and stick assembly 110 to which proximal end a bucket 120 is attached. Further, the undercarriage 200 comprises a base 210 as well as chain tracks 220. In Figure 8, the outcome of the calculation step S50 of calculating a virtual envelope E is illustrated. More detailed, the calculated virtual envelope E corresponds to the shape of the undercarriage 200 in such a way, that the virtual envelope E follows the contour of the undercarriage 200 at a predetermined distance E1. According to the embodiments set forth in Figure 8, the contour may be understood as a three-dimensional hull following the actual physical outline of the undercarriage 200, including the base 210 and the track chains 220. In this respect, the predetermined distance E1 may be constant and/or transient time-wise and/or location-wise and/or may depend on further inputs or conditions.

In the embodiment of Figure 8, the bucket 120 comprises a current relative distance D with respect to the track chains 220 or the undercarriage 200 as a whole unit. As a result, according to the embodiment of Figure 8, restricting the actuation of the bucket 120 may be conducted on the basis of either the current relative distance D or the relationship of the bucket 120 the virtual envelope E, or both. Restricting the actuation on the basis of the current relative distance D may be achieved by checking, if the at least one current relative distance D fulfills a predetermined condition P. On the other hand, restricting the actuation of the bucket 120 of the superstructure 100 may be achieved by checking, if the bucket 120 reaches or intersects the virtual envelope E. In either way, the primary goal in the context of the disclosure of Figure 8 may be to stop or slow down further movement of the bucket 120, if restricting the actuation of the bucket and 20 was confirmed by a corresponding preceding check.

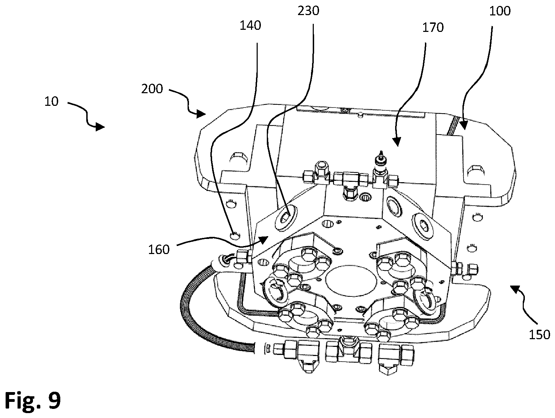

Figure 9 shows a swivel 150 of the construction machine 10 seen from the inside of an undercarriage 200 in a perspective view. According to the embodiments set forth in Figure 9, the swivel 150 is a component connecting the superstructure 100 with the undercarriage 200. To this end, the swivel 150 may comprise a lower part 160 mounted to the undercarriage 200 and an upper part 170 which is rotatably coupled to the lower part 160 of the swivel 150 and which is mounted to the superstructure 100. A trigger unit 230 may be attached to the lower part 160 of the swivel 150, moving with the undercarriage 200. Accordingly, a sensor unit 140 may be attached to the upper part 170 of the swivel 150, moving with the superstructure 100.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention as defined by the appended claims.

### Industrial Applicability

With reference to the Figures, a method of operating a construction machine as mentioned above is applicable in any suitable construction machine, such as an excavator or mining shovel.

## Claims

1. Method of operating a construction machine (10) comprising a superstructure (100) and an undercarriage (200) rotatably coupled thereto, the method comprising:
retrieving (S1) a trigger signal (T) at a predetermined relative angle (α) between the superstructure (100) and the undercarriage (200) while operating the construction machine (10);
retrieving (S2) an absolute angle (β) of the superstructure (100), the retrieved absolute angle (β) being uncorrelated to the orientation of the undercarriage (200); and
calculating (S3) a current relative angle (γ) between the superstructure (100) and the undercarriage (200) on the basis of the trigger signal (T) and the absolute angle (β), wherein the absolute angle (β) is known for the time the trigger signal (T) is retrieved and for the time the current relative angle (γ) is calculated.

2. Method according to claim 1, further comprising retrieving (S10) at least one further trigger signal (T) at at least one further predetermined relative angle (α) between the superstructure (100) and the undercarriage (200).

3. Method according to claims 1 or 2, further comprising a step (S30) of recalculating the current relative angle (γ) between the superstructure (100) and the undercarriage (200) every time a trigger signal (T) is received.

4. Method according to any of the previous claims, wherein the predetermined relative angle (α) is at least one of 45°, 90°, 180° and/or 270°.

5. Method according to any of the previous claims, wherein retrieving the trigger signal (T) is achieved via a sensor unit (140) provided on the superstructure (100), wherein the sensor unit (140) is triggered by a trigger unit (230) provided on the undercarriage (200).

6. Method according to claim 5, wherein the sensor unit (140) comprises a switch and the trigger unit (230) comprises a switch actuator.

7. Method according to claims 5 or 6, wherein the sensor unit (140) comprises a hall sensor and the trigger unit (230) comprises a magnet.

8. Method according to claim 5 to 7, wherein the trigger unit (230) is provided on a lower part (160) of a swivel (150) and the sensor unit (140) is provided on an upper part (170) of the swivel (150) and/or on the superstructure (100).

9. Method according to any of the previous claims, further comprising the step (S4) of retrieving geometric information (η) corresponding to the superstructure (100) and/or the undercarriage (200).

10. Method according to claim 9, further comprising the step (S5) of calculating, based on the current relative angle (γ) between the superstructure (100) and the undercarriage (200), at least one current relative distance (D) between the undercarriage (200) and a component of the superstructure (100).

11. Method according to claim 10, further comprising the step (S6) of restricting an actuation of a component of the superstructure (100) and/or the undercarriage (200), if the at least one current relative distance (D) fulfils a predetermined condition (P).

12. Method according to any of the previous claims, further comprising the step (S50) of calculating a virtual envelope (E) corresponding to the shape of the undercarriage (200), preferably wherein the virtual envelope (E) follows the contour of the undercarriage (200) at a predetermined distance (E1).

13. Method according to claim 12, further comprising the step (S60) of restricting an actuation of a component of the superstructure (100) and/or the undercarriage (200), if said component reaches or intersects the virtual envelope (E).

14. Construction machine (10) comprising an undercarriage (200) and a superstructure (100) rotatably mounted thereto, the construction machine (10) comprising an absolute angle detection means (130) for detecting an absolute angle (β) of the superstructure (100) being uncorrelated to the orientation of the undercarriage (200), a sensor unit (140) configured to retrieve a trigger signal (T) when the superstructure (100) is in a predetermined relative angle (α) with the undercarriage (200) and an operator assist system for calculating a current relative angle (γ) based on the absolute angle (β) and the trigger signal (T), wherein the absolute angle (β) is known for the time the trigger signal (T) is retrieved and for the time the current relative angle (γ) is calculated.

## Patentansprüche

1. Verfahren zum Betreiben einer Baumaschine (10), umfassend einen Oberwagen (100) und einen drehbar damit gekoppelten Unterwagen (200), das Verfahren umfassend:
Abrufen (S1) eines Triggersignals (T) bei einem zuvor bestimmten relativen Winkel (α) zwischen dem Oberwagen (100) und dem Unterwagen (200) während die Baumaschine (10) betrieben wird;
Abrufen (S2) eines absoluten Winkels (β) des Oberwagens (100), wobei der abgerufene absolute Winkel (β) mit der Ausrichtung des Unterwagens (200) unkorreliert ist; und
Berechnen (S3) eines aktuellen relativen Winkels (γ) zwischen dem Oberwagen (100) und dem Unterwagen (200) auf der Basis des Triggersignals (T) und des absoluten Winkels (β), wobei der absolute Winkel (β) für den Zeitpunkt, an dem das Triggersignal (T) abgerufen wird, und für den Zeitpunkt an dem der aktuelle relative Winkels (γ) berechnet wird, bekannt ist.

2. Verfahren nach Anspruch 1, ferner umfassend das Abrufen (S10) mindestens eines weiteren Triggersignals (T) bei mindestens einem weiteren zuvor bestimmten relativen Winkel (α) zwischen dem Oberwagen (100) und dem Unterwagen (200).

3. Verfahren nach Anspruch 1 oder 2, ferner umfassend einen Schritt (S30) eines Neuberechnens des aktuellen relativen Winkels (γ) zwischen dem Oberwagen (100) und dem Unterwagen (200), jedes Mal, wenn ein Triggersignal (T) empfangen wird.

4. Verfahren nach einem der vorstehenden Ansprüche, wobei der zuvor bestimmte relative Winkel (α) mindestens 45°, 90°, 180° und/oder 270° beträgt.

5. Verfahren nach einem der vorstehenden Ansprüche, wobei das Abrufen des Triggersignals (T) über eine an dem Oberwagen (100) bereitgestellte Sensoreinheit (140) ausgeführt wird, wobei die Sensoreinheit (140) durch eine an dem Unterwagen (200) bereitgestellte Triggereinheit (230) getriggert wird.

6. Verfahren nach Anspruch 5, wobei die Sensoreinheit (140) einen Schalter umfasst und die Triggereinheit (230) ein Schalterbetätigungselement umfasst.

7. Verfahren nach Anspruch 5 oder 6, wobei die Sensoreinheit (140) einen Hall-Sensor umfasst und die Triggereinheit (230) einen Magneten umfasst.

8. Verfahren nach den Ansprüchen 5 bis 7, wobei die Triggereinheit (230) an einem Unterteil (160) eines Drehgelenks (150) bereitgestellt ist und die Sensoreinheit (140) an einem Oberteil (170) des Drehgelenks (150) und/oder an dem Oberwagen (100) bereitgestellt ist.

9. Verfahren nach einem der vorstehenden Ansprüche, ferner umfassend den Schritt (S4) des Abrufens geometrischer Informationen (η), die dem Oberwagen (100) und/oder dem Unterwagen (200) entsprechen.

10. Verfahren nach Anspruch 9, ferner umfassend den Schritt (S5) des Berechnens, basierend auf dem aktuellen relativen Winkel (γ) zwischen dem Oberwagen (100) und dem Unterwagen (200), mindestens eines aktuellen relativen Abstands (D) zwischen dem Unterwagen (200) und einer Komponente des Oberwagens (100).

11. Verfahren nach Anspruch 10, ferner umfassend den Schritt (S6) eines Einschränkens einer Betätigung einer Komponente des Oberwagens (100) und/oder des Unterwagens (200), falls der mindestens eine aktuelle relative Abstand (D) eine zuvor bestimmte Bedingung (P) erfüllt.

12. Verfahren nach einem der vorstehenden Ansprüche, ferner umfassend den Schritt (S50) des Berechnens einer virtuellen Hüllkurve (E), die der Form des Unterwagens (200) entspricht, wobei vorzugsweise die virtuelle Hüllkurve (E) der Kontur des Unterwagens (200) in einem zuvor bestimmten Abstand (E1) folgt.

13. Verfahren nach Anspruch 12, ferner umfassend den Schritt (S60) des Einschränkens einer Betätigung einer Komponente des Oberwagens (100) und/oder des Unterwagens (200) umfasst, falls die Komponente die virtuelle Hüllkurve (E) erreicht oder schneidet.

14. Baumaschine (10) umfassend einen Unterwagen (200) und einen drehbar daran montierten Oberwagen (100), die Baumaschine (10) umfassend ein Absolutwinkelerfassungsmittel (130) zum Erfassen eines absoluten Winkels (β) des Oberwagens (100), der mit der Ausrichtung des Unterwagens (200) unkorreliert ist, eine Sensoreinheit (140), die konfiguriert ist, um ein Triggersignal (T) abzurufen, wenn sich der Oberwagen (100) in einem zuvor bestimmten relativen Winkel (α) mit dem Unterwagen (200) befindet, und ein Bedienerunterstützungssystem zum Berechnen eines aktuellen relativen Winkels (γ) basierend auf dem absoluten Winkel (β) und dem Triggersignal (T), wobei der absolute Winkel (β) für den Zeitpunkt, an dem das Triggersignal (T) abgerufen wird, und für den Zeitpunkt, an dem der aktuelle relative Winkel (γ) berechnet wird, bekannt ist.

## Revendications

1. Procédé permettant de faire fonctionner un engin de chantier (10) comprenant une superstructure (100) et un train de roulement (200) accouplé de manière rotative à celle-ci, le procédé comprenant :
la récupération (S1) d'un signal de déclenchement (T) à un angle relatif (α) prédéterminé entre la superstructure (100) et le train de roulement (200) pendant le fonctionnement de l'engin de chantier (10)
la récupération (S2) d'un angle absolu (β) de la superstructure (100), l'angle absolu (β) récupéré n'étant pas corrélé à l'orientation du train de roulement (200) ; et
le calcul (S3) d'un angle relatif actuel (γ) entre la superstructure (100) et le train de roulement (200) en fonction du signal de déclenchement (T) et de l'angle absolu (β), dans lequel l'angle absolu (β) est connu pour le moment où le signal de déclenchement (T) est récupéré et pour le moment où l'angle relatif actuel (γ) est calculé.

2. Procédé selon la revendication 1, comprenant en outre la récupération (S10) d'au moins un autre signal de déclenchement (T) à au moins un autre angle relatif (α) prédéterminé entre la superstructure (100) et le train de roulement (200).

3. Procédé selon les revendications 1 ou 2, comprenant en outre une étape (S30) de recalcul de l'angle relatif actuel (γ) entre la superstructure (100) et le train de roulement (200) chaque fois qu'un signal de déclenchement (T) est reçu.

4. Procédé selon l'une quelconque des revendications précédentes, dans lequel l'angle relatif (α) prédéterminé est au moins l'un parmi 45 °, 90 °, 180 ° et/ou 270 °.

5. Procédé selon l'une quelconque des revendications précédentes, dans lequel la récupération du signal de déclenchement (T) est obtenue par l'intermédiaire d'une unité de capteur (140) prévue sur la superstructure (100), dans lequel l'unité de capteur (140) est déclenchée par une unité de déclenchement (230) prévue sur le train de roulement (200).

6. Procédé selon la revendication 5, dans lequel l'unité de capteur (140) comprend un commutateur et l'unité de déclenchement (230) comprend un actionneur de commutateur.

7. Procédé selon les revendications 5 ou 6, dans lequel l'unité de capteur (140) comprend un capteur à effet Hall et l'unité de déclenchement (230) comprend un aimant.

8. Procédé selon les revendications 5 à 7, dans lequel l'unité de déclenchement (230) est prévue sur une partie inférieure (160) d'un tourillon (150) et l'unité de capteur (140) est prévue sur une partie supérieure (170) du tourillon (150) et/ou sur la superstructure (100).

9. Procédé selon l'une quelconque des revendications précédentes, comprenant en outre l'étape (S4) de récupération d'informations géométriques (η) correspondant à la superstructure (100) et/ou au train de roulement (200).

10. Procédé selon la revendication 9, comprenant en outre l'étape (S5) de calcul, sur la base de l'angle relatif actuel (γ) entre la superstructure (100) et le train de roulement (200), d'au moins une distance relative actuelle (D) entre le train de roulement (200) et un composant de la superstructure (100).

11. Procédé selon la revendication 10, comprenant en outre l'étape (S6) de restriction de l'actionnement d'un composant de la superstructure (100) et/ou du train de roulement (200), si l'au moins une distance relative actuelle (D) remplit une condition prédéterminée (P).

12. Procédé selon l'une quelconque des revendications précédentes, comprenant en outre l'étape (S50) de calcul d'une enveloppe virtuelle (E) correspondant à la forme du train de roulement (200), de préférence dans lequel l'enveloppe virtuelle (E) suit le contour du train de roulement (200) à une distance prédéterminée (E1).

13. Procédé selon la revendication 12, comprenant en outre l'étape (S60) de restriction de l'actionnement d'un composant de la superstructure (100) et/ou du train de roulement (200), si ledit composant atteint ou croise l'enveloppe virtuelle (E).

14. Engin de chantier (10) comprenant un train de roulement (200) et une superstructure (100) montée de manière rotative sur celui-ci, l'engin de chantier (10) comprenant un moyen de détection d'angle absolu (130) pour détecter un angle absolu (β) de la superstructure (100) n'étant pas corrélé à l'orientation du train de roulement (200), une unité de capteur (140) conçue pour récupérer un signal de déclenchement (T) lorsque la superstructure (100) se trouve dans un angle relatif (α) prédéterminé avec le train de roulement (200) et un système d'assistance à l'opérateur pour calculer un angle relatif actuel (γ) en fonction de l'angle absolu (β) et du signal de déclenchement (T), dans lequel l'angle absolu (β) est connu pour le moment où le signal de déclenchement (T) est récupéré et pour le moment où l'angle relatif actuel (γ) est calculé.
